(19) Europäisches Patentamt
European Patent Office
Office européen des brevets

(11) EP 4 678 676 A1

(12) **EUROPEAN PATENT APPLICATION**
published in accordance with Art. 153(4) EPC

(43) Date of publication:
**14.01.2026 Bulletin 2026/03**

(21) Application number: **24778646.0**

(22) Date of filing: **30.01.2024**

(51) International Patent Classification (IPC):
***C08G 18/80*** *(2006.01)* ***C08G 18/00*** *(2006.01)*
***C08G 18/18*** *(2006.01)* ***C08G 18/28*** *(2006.01)*
***C09D 5/00*** *(2006.01)* ***C09D 7/63*** *(2018.01)*
***C09D 175/08*** *(2006.01)*

(52) Cooperative Patent Classification (CPC):
**C08G 18/00; C08G 18/18; C08G 18/28; C08G 18/80; C09D 5/00; C09D 7/63; C09D 175/08**

(86) International application number:
**PCT/JP2024/002924**

(87) International publication number:
**WO 2024/202500 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 JP 2023047830**

(71) Applicant: **Tosoh Corporation**
**Yamaguchi 746-8501 (JP)**

(72) Inventors:
- **NOGUCHI Shuto**
  **Yokkaichi-shi, Mie 510-8540 (JP)**
- **YASUDA Akihiro**
  **Yokkaichi-shi, Mie 510-8540 (JP)**

(74) Representative: **TBK**
**Bavariaring 4-6**
**80336 München (DE)**

(54) **BLOCKED POLYISOCYANATE COMPOSITION, CURING AGENT FOR AQUEOUS COATING, AQUEOUS COATING COMPOSITION, AND COATING FILM**

(57) A blocked polyisocyanate composition includes a blocked polyisocyanate and a deblocking catalyst, the blocked polyisocyanate has an alkoxy polyethylene oxide group having an average of 14 to 50 ethylene oxide units, and the deblocking catalyst includes a quaternary ammonium salt.

EP 4 678 676 A1

## Description

### Technical Field

The present disclosure relates to a blocked polyisocyanate composition, a curing agent for aqueous coating material, an aqueous coating composition, and a coating film.

### Background Art

Conventionally, polyisocyanate is known as a component of compositions used for adhesives, coatings, and the like. For example, polyurethane resin coatings combining polyol and polyisocyanate are known to have excellent abrasion resistance, chemical resistance, and stain resistance.

Coating materials using polyisocyanate as a curing agent are generally two-part compositions and include a main agent component (e.g., polyol) and polyisocyanate. In a two-part composition, the main agent component and the polyisocyanate are stored separately and are mixed for use at the time of coating. However, once mixed, the coating material cures in a short time, resulting in a short pot life, which has been a problem in terms of workability during coating. Furthermore, since polyisocyanate reacts easily with water, it has been impossible to use polyisocyanate in aqueous coating materials such as electrodeposition coating materials.

To solve the above problems, a method is known in which polyisocyanate is reacted with an active hydrogen group-containing compound called a blocking agent to inactivate it. The blocked polyisocyanate obtained by this method does not react with a main agent component (such as polyol) at room temperature, but when heated, the blocking agent dissociates to regenerate isocyanate groups, which then react with the main agent component to form crosslinks. Therefore, with a blocked polyisocyanate, the pot life is not limited, and it becomes possible to prepare a coating material by mixing the main agent component and the curing agent component in advance, also enabling the application of polyisocyanate to aqueous coating materials.

Conventionally, quaternary ammonium salts, metal-based catalysts, and the like have been used as catalysts for dissociating the blocking agent from the blocked polyisocyanate (deblocking catalysts) (for example, see Patent Literatures 1 to 3).

### Citation List

### Patent Literature

Patent Literature 1: Japanese Unexamined Patent Publication No. H06-192364
Patent Literature 2: Japanese Unexamined Patent Publication No. H08-170048
Patent Literature 3: Japanese Patent No. 5073978

### Summary of Invention

### Technical Problem

In recent years, there has been a demand for curing coating films at lower temperatures than before for the purpose of cost reduction, reduction of carbon dioxide emissions in baking coating process, and to enable coating on plastic members. However, when the above-described deblocking catalysts are used, it is difficult to obtain sufficient low-temperature curability in aqueous coating compositions.

An object of an aspect of the present disclosure is to provide an aqueous coating composition having excellent low-temperature curability by using a blocked polyisocyanate composition.

### Solution to Problem

The present disclosure provides at least the following [1] to [10].

[1] A blocked polyisocyanate composition, comprising: a blocked polyisocyanate; and a deblocking catalyst,

wherein the blocked polyisocyanate has an alkoxy polyethylene oxide group comprising an average of 14 to 50 ethylene oxide units, and

the deblocking catalyst comprises a quaternary ammonium salt.

[2] The blocked polyisocyanate composition according to [1], wherein a number of the ethylene oxide units comprised in the alkoxy polyethylene oxide group is an average of 15 to 25.
[3] The blocked polyisocyanate composition according to [1] or [2], wherein a content of the alkoxy polyethylene oxide group is 5 to 30% by mass, based on a total amount of isocyanate compounds in an isocyanate composition obtained by dissociating a blocking agent from the blocked polyisocyanate.
[4] The blocked polyisocyanate composition according to [1] or [2], wherein a content of the alkoxy polyethylene oxide group is 5 to 25% by mass, based on a total amount of isocyanate compounds in an isocyanate composition obtained by dissociating a blocking agent from the blocked polyisocyanate.
[5] The blocked polyisocyanate composition according to any one of [1] to [4], wherein the blocked polyisocyanate comprises a structure derived from an aliphatic polyisocyanate having 4 to 6 carbon atoms or a derivative thereof.
[6] The blocked polyisocyanate composition according to any one of [1] to [5], wherein the quaternary ammonium salt comprises a cationic group represented by the following formula (1).

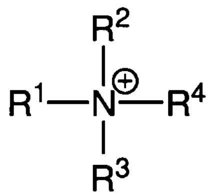
(1)

[In formula (1), $R^1$ represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms.]
[7] The blocked polyisocyanate composition according to any one of [1] to [6], wherein the blocked polyisocyanate has an isocyanate group blocked with an oxime-based blocking agent.
[8] A curing agent for aqueous coating material, comprising the blocked polyisocyanate composition according to any one of [1] to [7].
[9] An aqueous coating composition, comprising: a compound having two or more isocyanate-reactive groups; a blocked polyisocyanate; a deblocking catalyst; and water,

wherein the blocked polyisocyanate has an alkoxy polyethylene oxide group comprising an average of 14 to 50 ethylene oxide units, and
the deblocking catalyst comprises a quaternary ammonium salt.

[10] A coating film formed from the aqueous coating composition according to [9].

## Advantageous Effects of Invention

According to an aspect of the present disclosure, it is possible to provide an aqueous coating composition having excellent low-temperature curability by using a blocked polyisocyanate composition.

## Description of Embodiments

Hereinafter, exemplary embodiments of the present disclosure will be described. However, the present disclosure is not limited to the following embodiments in any way. In this specification, a numerical range indicated using "to" indicates a range including the numerical values described before and after "to" as the minimum and maximum values, respectively. Unless otherwise specified, the units of the numerical values described before and after "to" are the same. Furthermore, the upper and lower limit values described individually can be arbitrarily combined. In this specification, room temperature means 5 to 35°C.

[Blocked Polyisocyanate Composition]

An embodiment of the present disclosure is a blocked polyisocyanate composition, including a blocked polyisocyanate and a deblocking catalyst, the blocked polyisocyanate has an alkoxy polyethylene oxide group having an average of 14 to 50 ethylene oxide units (hereinafter, also referred to as "EO units"), and the deblocking catalyst includes a quaternary ammonium salt. Hereinafter, the blocked polyisocyanate having the specific alkoxy polyethylene oxide

oxide group is referred to as "blocked polyisocyanate (A)".

The blocked polyisocyanate (A) may have hydrophilicity because it has the alkoxy polyethylene oxide group. Therefore, the blocked polyisocyanate (A) can also be referred to as an aqueous blocked polyisocyanate.

According to the above blocked polyisocyanate composition, an aqueous coating composition having excellent low-temperature curability can be obtained. Here, "excellent low-temperature curability" means that even when curing is performed at a low temperature (for example, a temperature of 100°C or lower), a coating film that is difficult to dissolve with a solvent (for example, methyl ethyl ketone) and has high hardness can be formed. The reason why such an effect is obtained is not clear, but it is presumed to be because the blocked polyisocyanate (A) has an alkoxy polyethylene oxide group having an average of 14 to 50 EO units, which allows the blocked polyisocyanate (A) and the quaternary ammonium salt to be mixed in a well-dispersed state, making it easier for the action of dissociating the blocking agent by the deblocking catalyst (quaternary ammonium salt) to be expressed, and because the number of the EO units is not excessive, a film with a dense structure is likely to be formed after curing.

(Blocked Polyisocyanate)

The blocked polyisocyanate (A) is a compound that can be derived from polyisocyanate which has neither isocyanate groups blocked by a blocking agent nor alkoxy polyethylene oxide groups (hereinafter, also referred to as "non-aqueous unblocked polyisocyanate"). The blocked polyisocyanate (A) has, for example, a structure derived from a non-aqueous unblocked polyisocyanate, an alkoxy polyethylene oxide group having an average of 14 to 50 EO units, and an isocyanate group blocked with a blocking agent (hereinafter, also referred to as a "blocked isocyanate group").

[Non-aqueous Unblocked Polyisocyanate]

The non-aqueous unblocked polyisocyanate is a compound having a plurality of isocyanate groups (free isocyanate groups) and not having an isocyanate group blocked by a blocking agent or an alkoxy polyethylene oxide group. Examples of the non-aqueous unblocked polyisocyanate include aromatic polyisocyanate, aliphatic polyisocyanate, alicyclic polyisocyanate, and their polyisocyanate derivatives. Examples of the derivatives include isocyanurate, allophanate, biuret, and the like. The derivative may be an isocyanate group-containing prepolymer obtained by the reaction of the above polyisocyanate and polyol, and may be a derivative of the prepolymer (for example, an isocyanurate, an allophanate, a biuret, or the like). As the polyol, for example, diol having 2 to 9 carbon atoms is used. Examples of such diol include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, and 2-ethyl-1,3-hexanediol.

The non-aqueous unblocked polyisocyanate may not have an aromatic ring from the viewpoint of improving the yellowing resistance of the cured coating film. That is, the non-aqueous unblocked polyisocyanate may be a non-aromatic polyisocyanate. Examples of the non-aromatic polyisocyanate include aliphatic polyisocyanate such as hexamethylene diisocyanate, tetramethylene diisocyanate, 2-methylpentane-1,5-diisocyanate, 3-methyl-pentane-1,5-diisocyanate, lysine triisocyanate, and trioxyethylene diisocyanate; alicyclic polyisocyanate such as isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate; and derivatives thereof.

The non-aqueous unblocked polyisocyanate may include an aliphatic polyisocyanate having 4 to 6 carbon atoms or a derivative thereof from the viewpoint of further improving curability, and may include hexamethylene diisocyanate or a derivative thereof from the viewpoint of additionally improving curability. In other words, the blocked polyisocyanate (A) may have a structure derived from an aliphatic polyisocyanate having 4 to 6 carbon atoms or a derivative thereof, and may have a structure derived from hexamethylene diisocyanate or a derivative thereof. As the derivative of hexamethylene diisocyanate, at least one selected from the group consisting of an isocyanurate, an allophanate, and a biuret may be used. Among these, when an isocyanurate is used, the coating film hardness can be further improved. The isocyanurate may be an isocyanurate of hexamethylene diisocyanate, or may be an isocyanurate of an isocyanate group-containing prepolymer obtained by the reaction of hexamethylene diisocyanate and polyol (for example, the diol described above).

When using a non-aqueous unblocked polyisocyanate including an isocyanurate, from the viewpoint of further improving the coating film hardness, the content of isocyanurate trimer (content of isocyanurate trimer) based on the total mass of the non-aqueous unblocked polyisocyanate may be 50% by mass or more, and the content rate of isocyanurate group (content rate of isocyanurate group) relative to the total (100 mol%) of isocyanurate groups and allophanate groups in the non-aqueous unblocked polyisocyanate may be more than 80 mol%. The upper limit of the content of isocyanurate trimer may be 80% by mass, and the upper limit of the content rate of isocyanurate group may be 99 mol%.

[Alkoxy Poly(ethylene oxide) Group]

The alkoxy polyethylene oxide group is represented by the formula: $-(OCH_2CH_2)_nOR$. n represents the number

of EO units (hereinafter, also referred to as "number of EO units"), and R represents an alkyl group.

The alkoxy polyethylene oxide group has an average of 14 to 50 EO units. "Average of 14 to 50" means that when the blocked polyisocyanate (A) has a plurality of alkoxy polyethylene oxide groups, the average value obtained by dividing the total number of EO units contained in those groups by the total number of alkoxy polyethylene oxide groups (total number of EO units / total number of alkoxy polyethylene oxide groups) is 14 to 50. In calculating the average number of EO units, numerical values below the decimal point shall be rounded off.

The average number of EO units contained in the alkoxy polyethylene oxide group may be 14 to 45, and may be 15 to 30 or 15 to 25, from the viewpoint that an aqueous coating composition with more excellent low-temperature curability is likely to be obtained. The average number of EO units contained in the alkoxy polyethylene oxide group may be 20 or more, 30 or more, or 40 or more.

The alkyl group (R) contained in the alkoxy polyethylene oxide group may be linear, branched, or cyclic. The number of carbon atoms in the alkyl group (R) is, for example, 1 to 18, and may be 1 to 12, 1 to 6, or 1 to 2. Specific examples of the alkyl group (R) include methyl group, ethyl group, n-propyl group, isopropyl group, n-butyl group, isobutyl group, t-butyl group, n-pentyl group, n-hexyl group, n-heptyl group, n-octyl group, 2-ethylhexyl group, 2-propylheptyl group, nonyl group, decyl group, isodecyl group, dodecyl group, hexadecyl group, tridecyl group, tetradecyl group, pentadecyl group, hexadecyl group, heptadecyl group, octadecyl group, and the like. Among these, when the alkyl group (R) is methyl group or ethyl group, the low-temperature curability of the aqueous coating composition tends to be further improved.

The alkoxy polyethylene oxide group may be a part of a group ($-NHCO(OCH_2CH_2)_nOR$) formed by the reaction of a polyethylene glycol monoalkyl ether ($H(OCH_2CH_2)_nOR$) and an isocyanate group.

The polyethylene glycol monoalkyl ether has a number-average molecular weight such that the average number of EO units falls within the above range. The number-average molecular weight of the polyethylene glycol monoalkyl ether may be, for example, 200 to 10,000, and may be 200 to 2,000 or 200 to 1,000. The lower limit of the number-average molecular weight of the polyethylene glycol monoalkyl ether may be 400 or 600. The number-average molecular weight means a value measured using gel permeation chromatography (GPC) and determined using polystyrene as a standard substance.

The content of the alkoxy polyethylene oxide group may be 5% by mass or more, and may be 10% by mass or more, 15% by mass or more, or 20% by mass or more, based on the total amount of isocyanate compounds in the isocyanate composition obtained by dissociating the blocking agent from the blocked polyisocyanate (A), from the viewpoint that an aqueous coating composition with more excellent low-temperature curability is likely to be obtained. The content of the alkoxy polyethylene oxide group may be 30% by mass or less, and may be 25% by mass or less or 20% by mass or less, based on the total amount of isocyanate compounds in the isocyanate composition obtained by dissociating the blocking agent from the blocked polyisocyanate (A), from the viewpoint that an aqueous coating composition with more excellent low-temperature curability is likely to be obtained. From these viewpoints, the content of the alkoxy polyethylene oxide group may be 5 to 30% by mass, and may be 5 to 25% by mass or 5 to 20% by mass, based on the total amount of isocyanate compounds in the isocyanate composition obtained by dissociating the blocking agent from the blocked polyisocyanate (A). In this specification, "isocyanate compound" means a compound having an isocyanate group.

The content of the alkoxy polyethylene oxide group based on the total mass of hydrophilic groups possessed by the blocked polyisocyanate (A) may be 90% by mass or more, and may be 95% by mass or more, from the viewpoint of more excellent low-temperature curability. The blocked polyisocyanate (A) may not have any hydrophilic group other than the alkoxy polyethylene oxide group.

[Blocked Isocyanate Group]

The blocked isocyanate group is an isocyanate group blocked with a blocking agent and has a structure derived from the blocking agent.

Examples of the blocking agent include alcohol-based blocking agents such as methanol, ethanol, n-butanol, isobutanol, 2-ethylhexanol, butyl cellosolve, propylene glycol monomethyl ether, ethylene glycol, and benzyl alcohol; phenol-based blocking agents such as phenol, cresol, ethylphenol, butylphenol, and 2-hydroxypyridine; lactam-based blocking agents such as $\varepsilon$-caprolactam, $\delta$-valerolactam, and $\gamma$-butyrolactam; oxime-based blocking agents such as formaldoxime, acetaldoxime, acetone oxime, methyl ethyl ketoxime, methyl isobutyl ketoxime, and cyclohexanone oxime; imidazole-based blocking agents such as imidazole, 2-methylimidazole, 4-methylimidazole, 2,4-dimethylimidazole, 2-ethylimidazole, 2-propylimidazole, 2-isopropylimidazole, 4-methyl-2-propylimidazole, 2-phenylimidazole, 4-phenylimidazole, 5-phenylimidazole, 2-methyl-4-phenylimidazole, 2-ethyl-4-methylimidazole, 2-undecylimidazole, and 2-heptadecylimidazole; and amine-based blocking agents such as diphenylamine, diisopropylamine, and isopropylethylamine. Among these, an oxime-based blocking agent may be used from the viewpoint of improving storage stability, and methyl ethyl ketoxime may be used from the viewpoint of further improving storage stability.

The blocked polyisocyanate (A) may have a free isocyanate group, and may not have a free isocyanate group from the viewpoint of improving storage stability. For example, all of the active isocyanate groups in the blocked

polyisocyanate (A) may be blocked isocyanate groups. Here, "active isocyanate group" means both a free isocyanate group and a blocked isocyanate group.

The blocked polyisocyanate (A) can be obtained, for example, by reacting the above-mentioned non-aqueous unblocked polyisocyanate, the above-mentioned poly(oxyethylene) glycol monoalkyl ether, and the above-mentioned blocking agent. That is, the blocked polyisocyanate (A) can be a reaction product of a non-aqueous unblocked polyisocyanate, a poly(oxyethylene) glycol monoalkyl ether, and a blocking agent. The non-aqueous unblocked polyisocyanate, the poly(oxyethylene) glycol monoalkyl ether, and the blocking agent may each be used alone, or in combination of two or more types. However, when an aromatic polyisocyanate is not used as the non-aqueous unblocked polyisocyanate, the yellowing resistance of the cured coating film can be improved.

The order of reacting the non-aqueous unblocked polyisocyanate, the poly(oxyethylene) glycol monoalkyl ether, and the blocking agent is not particularly limited. For example, the non-aqueous unblocked polyisocyanate and the poly(oxyethylene) glycol monoalkyl ether may be reacted to obtain an isocyanate group-terminated precursor, and then the obtained isocyanate group-terminated precursor may be reacted with the blocking agent.

The reaction between the non-aqueous unblocked polyisocyanate and the poly(oxyethylene) glycol monoalkyl ether may be performed, for example, in the presence of a solvent. As the solvent, aromatic solvents such as toluene and xylene, ketone-based solvents such as acetone, methyl ethyl ketone, and methyl isobutyl ketone, ester-based solvents such as ethyl acetate and butyl acetate, glycol ether-based solvents such as ethylene glycol monoethyl ether acetate, propylene glycol monomethyl ether acetate, and diethylene glycol diethyl ether, and the like can be used. The reaction temperature may be, for example, 20 to 200°C. The reaction time may be, for example, 1 to 10 hours. The amounts of the polyisocyanate and the poly(oxyethylene) glycol monoalkyl ether used may be adjusted so that the content of the alkoxy polyethylene oxide group falls within the above range. Although the reaction proceeds without a catalyst, a known urethanization reaction catalyst can be used to promote the reaction.

The reaction between the isocyanate group-terminated precursor and the blocking agent can be performed according to the reaction conditions of a conventional blocking reaction. The reaction between the isocyanate group-terminated precursor and the blocking agent may be performed at room temperature or while being heated. Regardless of whether heating is performed, the temperature of the reaction solution may be, for example, 20 to 200°C.

The method for producing the blocked polyisocyanate (A) is not limited to the above. For example, after reacting a non-aqueous unblocked polyisocyanate, a poly(oxyethylene) glycol monoalkyl ether, and a blocking agent, if the obtained reaction product has a free isocyanate group, the blocked polyisocyanate (A) can also be obtained by reacting the free isocyanate group of the reaction product with a modifier such as an active hydrogen group-containing compound.

Furthermore, instead of the non-aqueous unblocked polyisocyanate, an unblocked polyisocyanate having an alkoxy polyethylene oxide group may be used. In this case, the blocked polyisocyanate (A) can be obtained by reacting the unblocked polyisocyanate having an alkoxy polyethylene oxide group with a blocking agent.

Furthermore, the blocked polyisocyanate (A) can also be obtained by using a blocked polyisocyanate that does not have an alkoxy polyethylene oxide group (non-aqueous blocked polyisocyanate) instead of the non-aqueous unblocked polyisocyanate. For example, the blocked polyisocyanate (A) can also be obtained by reacting a blocked polyisocyanate that does not have an alkoxy polyethylene oxide group with the above-mentioned poly(oxyethylene) glycol monoalkyl ether.

The blocked polyisocyanate (A) may be used alone, or in combination of two or more types. For example, two or more types of blocked polyisocyanate (A) derived from different types of non-aqueous unblocked polyisocyanate may be used in combination.

The content of the blocked polyisocyanate (A) may be 40% by mass or more, and may be 60% by mass or more or 80% by mass or more, based on the total solid content of the blocked polyisocyanate composition, from the viewpoint that an aqueous coating composition with more excellent low-temperature curability is likely to be obtained. The content of the blocked polyisocyanate (A) may be less than 100% by mass, and may be 95% by mass or less or 90% by mass or less, based on the total solid content of the blocked polyisocyanate composition, from the viewpoint of improving the storage stability of the coating. From these viewpoints, the content of the blocked polyisocyanate (A) may be, for example, 40% by mass or more and less than 100% by mass, based on the total solid content of the blocked polyisocyanate composition. The total solid content of the blocked polyisocyanate composition means the amount obtained by subtracting the amount of the solvent from the total amount of the blocked polyisocyanate composition when the blocked polyisocyanate composition contains a solvent, and means the total amount of the blocked polyisocyanate composition when the blocked polyisocyanate composition does not contain a solvent.

(Deblocking Catalyst)

The deblocking catalyst includes a quaternary ammonium salt. As the quaternary ammonium salt, any quaternary ammonium salt known as a deblocking catalyst can be used without particular limitation. Among them, when a quaternary ammonium salt containing a cationic group represented by the following formula (1) is used, an aqueous

coating composition with more excellent low-temperature curability is likely to be obtained.

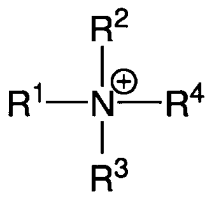 (1)

In formula (1), $R^1$ represents an alkyl group having 1 to 16 carbon atoms or an aryl group having 6 to 16 carbon atoms, which may have a hydroxy group, an amino group, or an alkoxy group as a substituent, and $R^2$ to $R^4$ each independently represent an alkyl group having 1 to 8 carbon atoms.

The number of carbon atoms in the alkyl group represented by $R^1$ may be 1 to 10, and may be 6 to 8. Specific examples of the alkyl group represented by $R^1$ include methyl group, ethyl group, n-propyl group, isopropyl group, n-butyl group, isobutyl group, t-butyl group, n-pentyl group, n-hexyl group, n-heptyl group, n-octyl group, 2-ethylhexyl group, 2-propylheptyl group, nonyl group, decyl group, isodecyl group, dodecyl group, hexadecyl group, and the like. These groups may be substituted with one or more hydroxy groups, may be substituted with one or more amino groups, or may be substituted with one or more alkoxy groups. The number of carbon atoms in the alkoxy group may be, for example, 1 to 8, 1 to 6, 1 to 4, or 1 to 2. Examples of the alkoxy group include methoxy group, ethoxy group, butoxy group, propyloxy group, pentyloxy group, hexyloxy group, and the like.

Examples of the aryl group represented by $R^1$ include phenyl group, naphthyl group, anthryl group, tolyl group, xylyl group, cumenyl group, vinylphenyl group, biphenylyl group, or phenanthryl group.

From the viewpoint that an aqueous coating composition with more excellent low-temperature curability is likely to be obtained, $R^1$ may be an alkyl group having 1 to 16 carbon atoms which may have a hydroxy group, an amino group, or an alkoxy group as a substituent, and may be an alkyl group having no substituent or a hydroxyalkyl group. Among them, when $R^1$ is a hydroxyalkyl group having no substituent, an aqueous coating composition with even more excellent low-temperature curability is likely to be obtained, and when $R^1$ is an alkyl group having no substituent, an aqueous coating composition with particularly excellent low-temperature curability is likely to be obtained. The number of carbon atoms in the alkyl group having no substituent may be 1 to 10, and may be 6 to 8. Among them, when the number of carbon atoms in the alkyl group is 8, the low-temperature curability of the aqueous coating composition tends to be further improved, and when $R^1$ is an n-octyl group, the low-temperature curability of the aqueous coating composition tends to be even further improved.

The number of carbon atoms in the alkyl groups represented by $R^2$ to $R^4$ may be 1 to 4, and may be 1 to 2. Specific examples of the alkyl groups represented by $R^2$ to $R^4$ include methyl group, ethyl group, n-propyl group, isopropyl group, n-butyl group, isobutyl group, t-butyl group, n-pentyl group, n-hexyl group, n-heptyl group, n-octyl group, 2-ethylhexyl group, and the like. From the viewpoint that an aqueous coating composition with more excellent low-temperature curability is likely to be obtained, $R^2$ to $R^4$ may all be methyl groups.

From the viewpoint that an aqueous coating composition with even more excellent low-temperature curability is likely to be obtained, the quaternary ammonium salt may have a structure represented by the following formula (2) or (3). Among them, when the quaternary ammonium salt has a structure represented by the following formula (2), an aqueous coating composition with particularly excellent low-temperature curability is likely to be obtained.

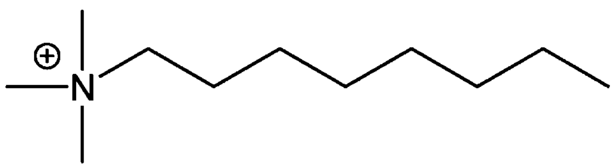 (2)

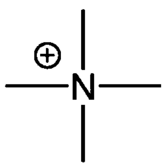 (3)

The anionic group of the quaternary ammonium salt may be, for example, an organic acid group or an inorganic acid group. Examples of the organic acid group include fatty acid group and monoalkyl carbonate group. Examples of the inorganic acid group include halogen group (e.g., fluoro group, chloro group, bromo group, etc.), hydroxy group, hydrogen

carbonate group, and carbonate group.

The number of carbon atoms in the fatty acid group (aliphatic monocarboxylic acid group) may be, for example, 1 to 12, and may be 1 to 7 or 1 to 3. Specific examples of the fatty acid group include formate group, acetate group, octylate, laurate, cyclohexanecarboxylate, pivalate, and the like.

The number of carbon atoms in the alkyl group in the monoalkyl carbonate group may be, for example, 1 to 8, and may be 1 to 4 or 1 to 2. Specific examples of the monoalkyl carbonate group include methyl carbonate group, ethyl carbonate group, propyl carbonate group, butyl carbonate group, and the like.

From the viewpoint that an aqueous coating composition with more excellent low-temperature curability is likely to be obtained, the anionic group of the quaternary ammonium salt may be a fatty acid group having 1 to 12 carbon atoms, a monoalkyl carbonate group having an alkyl group of 1 to 8 carbon atoms, or a hydroxy group. From the viewpoint that an aqueous coating composition with even more excellent low-temperature curability is likely to be obtained, the anionic group of the quaternary ammonium salt may be a fatty acid group having 1 to 7 carbon atoms, or a monoalkyl carbonate group having an alkyl group of 1 to 4 carbon atoms. Among them, when the anionic group of the quaternary ammonium salt is a monoalkyl carbonate group having an alkyl group of 1 to 2 carbon atoms, an aqueous coating composition with particularly excellent low-temperature curability is likely to be obtained.

From the viewpoints described above, the quaternary ammonium salt may be configured by a combination of a cationic group represented by any one of the above formulas (1) to (3) with a fatty acid group having 1 to 12 carbon atoms, a monoalkyl carbonate group having an alkyl group of 1 to 8 carbon atoms, or a hydroxy group.

Specific examples of the quaternary ammonium salt include trimethyl n-octylammonium bicarbonate, trimethyl n-octylammonium methyl carbonate, trimethyl n-octylammonium carbonate, tetramethylammonium acetate, hexadecyltrimethylammonium hydroxide, trimethyl(2-hydroxypropyl)ammonium 2-ethylhexanoate, tetramethylammonium bicarbonate, tetraethylammonium bicarbonate, tetra-n-propylammonium bicarbonate, tetra-n-butylammonium bicarbonate, triethylmonomethylammonium bicarbonate, tri-n-propylmonomethylammonium bicarbonate, tri-n-butylmonomethylammonium bicarbonate, tri-n-butylmonoethylammonium bicarbonate, tetramethylammonium monomethyl carbonate, tetraethylammonium monoethyl carbonate, tetra-n-butylammonium monobutyl carbonate, triethylmonomethylammonium monomethyl carbonate, tri-n-propylmonomethylammonium monomethyl carbonate, tri-n-butylmonomethylammonium monomethyl carbonate, tri-n-butylmonoethylammonium monoethyl carbonate, tetramethylammonium carbonate, tetra-n-butylammonium carbonate, and the like. The quaternary ammonium salt may be used alone, or in combination of two or more types.

The blocked polyisocyanate composition may include a deblocking catalyst other than the quaternary ammonium salt. In the blocked polyisocyanate composition, the proportion of the quaternary ammonium salt in the total deblocking catalyst may be 0.0001 to 100% by mass, and may be 0.001 to 100% by mass or 0.01 to 100% by mass.

From the viewpoint of improving low-temperature curability, the content of the deblocking catalyst may be 0.0001 parts by mass or more, and may be 0.001 parts by mass or more, 0.01 parts by mass or more, 0.1 parts by mass or more, 1 part by mass or more, 5 parts by mass or more, or 10 parts by mass or more, with respect to 100 parts by mass of the blocked polyisocyanate (A). From the viewpoint of improving the storage stability of the coating, the content of the deblocking catalyst may be 40 parts by mass or less, and may be 30 parts by mass or less or 20 parts by mass or less, with respect to 100 parts by mass of the blocked polyisocyanate (A). From these viewpoints, the content of the deblocking catalyst may be, for example, 0.0001 to 40 parts by mass with respect to 100 parts by mass of the blocked polyisocyanate (A).

(Other Components)

The blocked polyisocyanate composition may contain a solvent. The solvent may be a hydrophilic solvent. Examples of the solvent include water, ethylene glycol, propylene glycol, 1,4-butanediol, methyl ethyl ketone, acetone, ethyl acetate, propylene glycol monomethyl ether acetate, diethylene glycol dimethyl ether, N-methylpyrrolidone, ethylene glycol monoethyl ether acetate, diethylene glycol diethyl ether, and the like. These solvents may be used alone, or in combination of two or more types.

The content of the solvent may be 0 to 90% by mass, and may be 5 to 80% by mass or 10 to 70% by mass, based on the total mass of the blocked polyisocyanate composition.

The blocked polyisocyanate composition may contain an unblocked polyisocyanate (for example, polyisocyanate remaining as an unreacted substance) and may contain an unreacted blocking agent. The content of the unblocked polyisocyanate contained in the blocked polyisocyanate composition may be 5% by mass or less, and may be 0% by mass, based on the total solid content of the blocked polyisocyanate composition. The content of the unreacted blocking agent contained in the blocked polyisocyanate composition may be 5% by mass or less, and may be 0% by mass, based on the total solid content of the blocked polyisocyanate composition.

The blocked polyisocyanate composition may further contain additives such as pigments, dispersion stabilizers, viscosity modifiers, leveling agents, anti-gelling agents, light stabilizers, antioxidants, ultraviolet absorbers, heat resistance improvers, inorganic and organic fillers, plasticizers, lubricants, antistatic agents, reinforcing materials, catalysts, and the like.

The active isocyanate group content rate (hereinafter, referred to as "active NCO content rate") of the blocked polyisocyanate composition may be 4 to 28% by mass, and may be 5 to 22% by mass or 6 to 16% by mass, from the viewpoint of further enhancing the curability of the coating. Here, the active NCO content rate is the mass percentage of isocyanate groups present in the blocked polyisocyanate composition that can participate in the crosslinking reaction. The active NCO content rate can be rephrased as the content rate (free NCO content rate) of free isocyanate groups in the polyisocyanate composition obtained by dissociating the blocking agent from the blocked polyisocyanate, relative to the total mass of the blocked polyisocyanate composition. The free NCO content rate can be determined by reacting the isocyanate groups in a measurement sample (polyisocyanate composition obtained by dissociating a blocking agent from a blocked polyisocyanate) with an excess of a secondary amine, and then back-titrating the unreacted secondary amine with hydrochloric acid.

The blocked polyisocyanate composition described above is obtained by mixing the blocked polyisocyanate (A), the deblocking catalyst, and optionally other components described above. The blocked polyisocyanate composition may be used as a curing agent component of an aqueous coating composition. That is, another embodiment of the present disclosure is a curing agent for aqueous coating material, including the above-described blocked polyisocyanate composition.

(Aqueous Coating Composition)

Another embodiment of the present disclosure is an aqueous coating composition including a compound having two or more isocyanate-reactive groups (hereinafter, referred to as "isocyanate-reactive compound"), the above-described blocked polyisocyanate (A), a quaternary ammonium salt that is a deblocking catalyst, and water. The details of the blocked polyisocyanate (A) and the quaternary ammonium salt are the same as the details of the blocked polyisocyanate (A) and the quaternary ammonium salt contained in the blocked polyisocyanate composition of the above embodiment.

Since the aqueous coating composition includes the blocked polyisocyanate (A) and the quaternary ammonium salt, it has excellent low-temperature curability.

The isocyanate-reactive compound has two or more isocyanate-reactive groups (e.g., active hydrogen groups). Examples of the isocyanate-reactive group include hydroxy group, amino group, and the like. From the viewpoint of further improving low-temperature curability, the isocyanate-reactive compound may have 4 to 70 isocyanate-reactive groups (e.g., active hydrogen groups).

Examples of the isocyanate-reactive compound include polyol, polyamine, amino alcohol, and the like. Among these, when polyol is used, the effects of the present disclosure are likely to be obtained. Examples of the polyol include acrylic polyol, polyester polyol, polyether polyol, epoxy polyol, polycarbonate polyol, polylactone polyol, and the like. The hydroxyl value of the polyol may be, for example, 10 to 300 mgKOH/g per solid content.

The number-average molecular weight of the isocyanate-reactive compound is, for example, 1,000 to 100,000, and from the viewpoint of further improving low-temperature curability, it may be 5,000 to 50,000. The number-average molecular weight means a value measured using gel permeation chromatography (GPC) and determined using polystyrene as a standard substance.

The isocyanate-reactive compound may be used in a state of being emulsified, dispersed, or dissolved in water. In other words, the aqueous coating composition may include an isocyanate-reactive compound-containing liquid (solution, dispersion, emulsion, or suspension) in which the isocyanate-reactive compound is emulsified, dispersed, or dissolved in water. The isocyanate-reactive compound-containing liquid may contain a neutralizing agent. Examples of the neutralizing agent include ammonia and water-soluble amino compounds (such as tertiary amine like triethylamine and 2-(dimethylamino)ethanol).

The equivalent ratio of isocyanate-reactive groups to active isocyanate groups ([isocyanate-reactive groups]/[active isocyanate groups]) contained in the aqueous coating composition is determined by the required coating film properties. The equivalent ratio is not particularly limited, but is usually in the range of 0.2 to 2.

The aqueous coating composition may contain other components that can be included in the blocked polyisocyanate composition described above.

The aqueous coating composition may be a one-part composition in which all constituent components are contained in a single liquid, or may be a multi-part composition in which the constituent components are present separately in a plurality of liquids. The multi-part aqueous coating composition may include a first liquid (main agent) containing the isocyanate-reactive compound and a second liquid (curing agent) containing the blocked polyisocyanate. In this case, other constituent components (the deblocking catalyst and other components) may be contained in the first liquid, may be contained in the second liquid, or may be contained in a liquid different from the first and second liquids.

The aqueous coating composition can be used as a top and intermediate coating material for automobiles, an

anti-chipping coating material, an electrodeposition coating material, a coating material for automobile parts, a coating material for automobile repair, a pre-coated metal/anti-corrosion steel sheet for metal products such as home appliances and office equipment, a coating material for building materials, a coating material for plastics, an adhesive, an adhesion-imparting agent, a sealant, and the like.

[Coating Film]

Another embodiment of the present disclosure is a coating film formed from the aqueous coating composition of the above embodiment.

The coating film includes a cured product of the aqueous coating composition of the above embodiment. The coating film can be formed by applying the aqueous coating composition onto a substrate by a known method and curing the coating film made of the aqueous coating composition (uncured coating film). Examples of known methods include roll coating, curtain flow coating, spray coating, electrostatic coating, bell coating, electrodeposition coating, and the like. The application amount of the aqueous coating composition, the thickness of the coating film, and the like may be appropriately determined according to the material of the surface to be coated, etc.

Curing of the coating film made of the aqueous coating composition may be performed by heating the coating film. The heating temperature (baking temperature) may be, for example, 200°C or lower. The heating time (baking time) may be, for example, 10 to 180 minutes. According to the aqueous coating composition of the present embodiment, a good cured coating film can be obtained even when baking is performed at a low temperature of 100°C or lower.

[Examples]

Hereinafter, the content of the present disclosure will be described in more detail with reference to Examples and Comparative Examples, but the present disclosure is not limited to the following Examples.

[Working Example 1]

(Preparation of Polyisocyanate A-1)

Into a four-necked flask equipped with a stirrer, a thermometer, a heating device, a nitrogen seal tube, and a cooling tube, 995 g of HDI, 5.0 g of 1,3-butanediol (manufactured by Tokyo Chemical Industry Co., Ltd.), and 0.3 g of phenol (manufactured by Tokyo Chemical Industry Co., Ltd.) were charged, and a urethanization reaction was carried out at 80°C for 2 hours under a nitrogen stream. Then, 0.04 g of potassium 2-ethylhexanoate (manufactured by Tokyo Chemical Industry Co., Ltd.), which is an isocyanuration catalyst, was added, and an isocyanuration reaction was carried out at 70°C for 2 hours. After the NCO content rate reached 40.0% by mass, 0.15 g of JP-508 (manufactured by Johoku Chemical Co., Ltd.) was added to terminate the reaction, and the reaction solution was cooled to room temperature. Unreacted HDI was removed from this reaction solution by thin-film distillation at a temperature of 130°C and a pressure of 0.04 kPa to obtain purified polyisocyanate A-1. The NCO content rate of polyisocyanate A-1 was 21.8% by mass, and the viscosity at 25°C was about 2,500 mPa· s.

($^1$H-NMR: Measurement of Content Rate of Isocyanurate Group) $^1$H-NMR measurement of polyisocyanate A-1 was performed to determine the content rate of isocyanurate group (the content rate of isocyanurate group relative to the total (100 mol%) of isocyanurate groups and allophanate groups). Specifically, the content rate of isocyanurate group was calculated from the area of the signal of the hydrogen atom of the methylene group adjacent to the nitrogen atom of the isocyanurate group at around 3.7 ppm and the signal of the hydrogen atom bonded to the nitrogen atom of the allophanate group at around 8.5 ppm. The content rate of isocyanurate group was 89 mol%. The $^1$H-NMR measurement was performed under the following measurement conditions.

[Measurement Conditions]

(1) Measurement apparatus: ECX400M (manufactured by JEOL Ltd., $^1$H-NMR)
(2) Measurement temperature: 23°C
(3) Sample concentration: 0.1 g/1 ml
(4) Number of scans: 16
(5) Relaxation delay: 5 seconds
(6) Solvent: Deuterated dimethyl sulfoxide
(7) Chemical shift reference: Hydrogen atom signal of the methyl group in deuterated dimethyl sulfoxide (2.5 ppm)

(GPC: Measurement of Content of Isocyanurate Trimer) Polyisocyanate A-1 was analyzed by GPC (gel permeation chromatography) to determine the content of isocyanurate trimer. In GPC, the peak of the isocyanurate trimer was detected as a single peak with a peak start at 20.5 minutes, a peak end at 23.0 minutes, and a peak top at 21.2 minutes. The content of isocyanurate trimer determined from the peak area of the isocyanurate trimer was 52% by mass. The GPC measurement was performed under the following measurement conditions.

[Measurement Conditions]

(1) Measuring instrument: HLC-8220 (manufactured by Tosoh Corporation)
(2) Column: TSKgel (manufactured by Tosoh Corporation)

- G3000H-XL
- G2500H-XL
- G2000H-XL
- G1000H-XL
  One of each of the above connected in series

(3) Carrier: THF (tetrahydrofuran)
(4) Detector: RI (refractive index) detector
(5) Temperature: 40°C
(6) Flow rate: 1.000 ml/min
(7) Calibration curve: Standard polystyrene (manufactured by Tosoh Corporation)

- F-80 (Molecular weight: 7.06 × 105, Molecular weight distribution: 1.05)
- F-20 (Molecular weight: 1.90 × 105, Molecular weight distribution: 1.05)
- F-10 (Molecular weight: 9.64 × 104, Molecular weight distribution: 1.01)
- F-2 (Molecular weight: 1.81 × 104, Molecular weight distribution: 1.01)
- F-1 (Molecular weight: 1.02 × 104, Molecular weight distribution: 1.02)
- A-5000 (Molecular weight: 5.97 × 103, Molecular weight distribution: 1.02)
- A-2500 (Molecular weight: 2.63 × 103, Molecular weight distribution: 1.05)
- A-500 (Molecular weight: 5.0 × 102, Molecular weight distribution: 1.14)

(8) Sample solution concentration: 0.5% THF solution.

[Example 1]

(Preparation of Blocked Polyisocyanate Composition)

Into a four-necked flask equipped with a stirrer, a thermometer, a heating device, a nitrogen seal tube, and a cooling tube, 312 g of polyisocyanate A-1, 78 g of MPG-081 (manufactured by Nippon Nyukazai Co., Ltd., polyethylene glycol monomethyl ether, average number of EO units = 15, number-average molecular weight = 690, trade name), and 336 g of diethyl diglycol (manufactured by Nippon Nyukazai Co., Ltd., diethylene glycol diethyl ether, trade name, "DEDG" in Table 1) were charged, the inside of the flask was purged with nitrogen, heated to 80°C with stirring, and reacted at the same temperature for 4 hours to obtain an isocyanate group-terminated precursor having an alkoxy polyethylene oxide group (average number of EO units = 15) as a hydrophilic group. Subsequently, 131 g of methyl ethyl ketoxime (manufactured by FUJIFILM Wako Pure Chemical Corporation, "MEKO" in Table 1) was charged so as not to exceed 80°C, reacted at 70°C for 2 hours, and after the disappearance of the NCO group peak (around 2270 $cm^{-1}$) was confirmed by infrared absorption spectrum (IR measurement), the mixture was cooled to room temperature, and 142 g of a trimethyl mono-n-octylammonium monomethyl carbonate solution (manufactured by Tosoh Corporation, solid content concentration 55% by mass, "TMOA-MC" in Table 1) was added and stirred for 30 minutes to obtain a composition including a blocked polyisocyanate (blocked polyisocyanate composition (BI-1)).

[Examples 2-3]

Blocked polyisocyanate compositions BI-2 to BI-3 were obtained in the same manner as in Example 1, except that MPEG-1000 (manufactured by Tokyo Chemical Industry Co., Ltd., polyethylene glycol monomethyl ether, average number of EO units = 22, number-average molecular weight = 1000) was used instead of MPG-081, and the blending amounts of the materials were changed to the amounts shown in Table 1.

[Example 4]

A blocked polyisocyanate composition BI-4 was obtained in the same manner as in Example 1, except that MPEG-2000 (manufactured by Tokyo Chemical Industry Co., Ltd., polyethylene glycol monomethyl ether, average number of EO units = 45, number-average molecular weight = 2000) was used instead of MPG-081, and the blending amounts of the materials were changed to the amounts shown in Table 1.

[Example 5]

A blocked polyisocyanate composition BI-5 was obtained in the same manner as in Example 1, except that 3,5-dimethylpyrazole (manufactured by Tokyo Chemical Industry Co., Ltd., "3,5-DMP" in Table 1) was used instead of methyl ethyl ketoxime, and the blending amounts of the materials were changed to the amounts shown in Table 1.

[Example 6]

A blocked polyisocyanate composition BI-6 was obtained in the same manner as in Example 1, except that a tetramethylammonium acetate solution (manufactured by Tokyo Chemical Industry Co., Ltd., solid content concentration 25% by mass, "TMA-Ac" in Table 1) was used instead of the trimethyl mono-n-octylammonium monomethyl carbonate solution, and the blending amounts of the materials were changed to the amounts shown in Table 1.

[Example 7]

A blocked polyisocyanate composition BI-7 was obtained in the same manner as in Example 1, except that a hexadecyltrimethylammonium hydroxide solution (manufactured by Tokyo Chemical Industry Co., Ltd., solid content concentration 25% by mass, "HDTMA-H" in Table 1) was used instead of the trimethyl mono-n-octylammonium monomethyl carbonate solution, and the blending amounts of the materials were changed to the amounts shown in Table 1.

[Example 8]

A blocked polyisocyanate composition BI-8 was obtained in the same manner as in Example 2, except that DABCO TMR (manufactured by Sankyo Air Products, Ltd., solid content concentration 75% by mass, trade name) was used instead of the trimethyl mono-n-octylammonium monomethyl carbonate solution, and the blending amounts of the materials were changed to the amounts shown in Table 1.

[Example 9]

A blocked polyisocyanate composition BI-9 was obtained in the same manner as in Example 1, except that the blending amounts of the materials were changed to the amounts shown in Table 1.

[Comparative Example 1]

A blocked polyisocyanate composition BI-10 was obtained in the same manner as in Example 1, except that the addition of the trimethyl mono-n-octylammonium monomethyl carbonate solution and the subsequent stirring were not performed, and the blending amounts of the materials were changed to the amounts shown in Table 2.

[Comparative Example 2]

A blocked polyisocyanate composition BI-11 was obtained in the same manner as in Example 1, except that dioctyltin dilaurate (manufactured by Kishida Chemical Co., Ltd., "DOTDL" in Table 2) was used instead of the trimethyl mono-n-octylammonium monomethyl carbonate solution, and the blending amounts of the materials were changed to the amounts shown in Table 2.

[Comparative Example 3]

A blocked polyisocyanate composition BI-12 was obtained in the same manner as in Example 1, except that MPEG-550 (manufactured by Tokyo Chemical Industry Co., Ltd., polyethylene glycol monomethyl ether, average number of EO units = 12, number-average molecular weight = 550) was used instead of MPG-081, and the blending amounts of the materials were changed to the amounts shown in Table 2.

[Comparative Example 4]

A blocked polyisocyanate composition BI-13 was obtained in the same manner as in Comparative Example 3, except that the blending amounts of the materials were changed to the amounts shown in Table 2.

[Comparative Example 5]

A blocked polyisocyanate composition BI-14 was obtained in the same manner as in Example 1, except that MPEG-4000 (manufactured by Tokyo Chemical Industry Co., Ltd., polyethylene glycol monomethyl ether, average number of EO units = 90, number-average molecular weight = 4000) was used instead of MPG-081, and the blending amounts of the materials were changed to the amounts shown in Table 2.

[Comparative Example 6]

A blocked polyisocyanate composition BI-15 was obtained in the same manner as in Example 1, except that PEG-1000 (manufactured by Tokyo Chemical Industry Co., Ltd., polyethylene glycol, average number of EO units = 22, number-average molecular weight = 1000) was used instead of MPG-081, and the blending amounts of the materials were changed to the amounts shown in Table 2.

[Comparative Example 7]

A blocked polyisocyanate composition BI-16 was obtained in the same manner as in Comparative Example 6, except that the blending amounts of the materials were changed to the amounts shown in Table 2.

[Comparative Example 8]

Into a four-necked flask equipped with a stirrer, a thermometer, a heating device, a nitrogen seal tube, and a cooling tube, 379 g of polyisocyanate A-1, 20 g of 12-hydroxystearic acid (manufactured by Tokyo Chemical Industry Co., Ltd.), and 377 g of diethylene glycol diethyl ether were charged, the inside of the flask was purged with nitrogen, heated to 80°C with stirring, and reacted at the same temperature for 4 hours to obtain an isocyanate group-terminated precursor. Subsequently, 160 g of methyl ethyl ketoxime was charged so as not to exceed 80°C, reacted at 70°C for 2 hours, and after the disappearance of the NCO group peak (around 2270 $cm^{-1}$) was confirmed by infrared absorption spectrum (IR measurement), the mixture was cooled to room temperature, 13 g of 2-(dimethylamino)ethanol (manufactured by Tokyo Chemical Industry Co., Ltd.) was charged and stirred for 30 minutes, and 51 g of a trimethyl mono-n-octylammonium monomethyl carbonate solution was added and stirred for 30 minutes to obtain a blocked polyisocyanate BI-17.

[Comparative Example 9]

A blocked polyisocyanate composition BI-18 was obtained in the same manner as in Comparative Example 8, except that the blending amounts of the materials were changed to the amounts shown in Table 2.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Blocked polyisocyanate composition | | BI-1 | BI-2 | BI-3 | BI-4 | BI-5 | BI-6 | BI-7 | BI-8 | BI-9 |
| Non-aqueous unblocked polyisocyanate | Polyisocyanate A-1 | 312 | 332 | 310 | 308 | 316 | 334 | 326 | 323 | 289 |
| Hydrophilic compound | MPEG550 | | | | | | | | | |
| | MPG-081 | 78 | | | | 56 | 83 | 82 | | 124 |
| | MPEG1000 | | 37 | 78 | | | | | 36 | |
| | MPEG2000 | | | | 77 | | | | | |
| Blocking agent | MEKO | 131 | 147 | 134 | 136 | | 140 | 137 | 143 | 115 |
| | 3,5-DMP | | | | | 150 | | | | |
| Deblocking catalyst | TMOA-MC | 142 | 152 | 142 | 142 | 142 | | | | 131 |
| | TMA-Ac | | | | | | 172 | | | |
| | HDTMA-H | | | | | | | 218 | | |
| | DABCO TMR | | | | | | | | 132 | |
| Solvent | DEDG | 336 | 332 | 336 | 336 | 336 | 271 | 237 | 367 | 341 |
| Average number of EO units | | 15 | 22 | 22 | 45 | 15 | 15 | 15 | 22 | 15 |
| Introduction rate of hydrophilic group [% by mass] | | 20 | 10 | 20 | 10 | 20 | 20 | 20 | 10 | 30 |
| Active NCO content rate [% by mass] | | 6.3 | 7.1 | 6.4 | 6.6 | 6.6 | 6.8 | 6.6 | 6.9 | 5.5 |
| Amount of catalyst [parts by weight] | | 15 | 16 | 15 | 15 | 15 | 8 | 10 | 20 | 14 |
| Solid content [% by mass] | | 60 | 60 | 60 | 60 | 60 | 60 | 60 | 60 | 60 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Blocked polyisocyanate composition | | BI-10 | BI-11 | BI-12 | BI-13 | BI-14 | BI-15 | BI-16 | BI-17 | BI-18 |
| Non-aqueous unblocked polyisocyanate | Polyisocyanate A-1 | 359 | 262 | 328 | 314 | 321 | 344 | 329 | 379 | 362 |
| Hydrophilic compound | MPEG550 | | | 82 | 78 | | | | | |
| | MPG-081 | 90 | 65 | | | | | | | |
| | MPEG4000 | | | | | 80 | | | | |
| | PEG1000 | | | | | | 86 | 82 | | |
| | 12-hydroxystearic acid | | | | | | | | 20 | 19 |
| Neutralizing agent | 2-(dimethylamino) ethanol | | | | | | | | 13 | 13 |
| Blocking agent | MEKO | 151 | 110 | 135 | 129 | 144 | 141 | 134 | 160 | 153 |
| Deblocking catalyst | TMOA-MC | | | 99 | 143 | 99 | 52 | 99 | 51 | 97 |
| | DOTDL | | 163 | | | | | | | |
| Solvent | DEDG | 400 | 400 | 355 | 336 | 355 | 377 | 355 | 377 | 356 |
| Average number of EO units | | 15 | 15 | 12 | 12 | 90 | 22 | 22 | 0 | 0 |
| Introduction rate of hydrophilic group [% by mass] | | 20 | 20 | 20 | 20 | 20 | 20 | 20 | 5 | 5 |
| Active NCO content rate [% by mass] | | 7.3 | 5.3 | 6.5 | 6.2 | 6.9 | 6.8 | 6.5 | 7.7 | 7.5 |
| Amount of catalyst [parts by weight] | | 0 | 37 | 10 | 15 | 10 | 5 | 10 | 5 | 10 |
| Solid content [% by mass] | | 60 | 60 | 60 | 60 | 60 | 60 | 60 | 60 | 60 |

The "Hydrophilic group introduction rate" in Tables 1 and 2 is the introduction rate of the hydrophilic group (alkoxy polyethylene oxide group) in the isocyanate group-terminated precursor, and is equal to the content of the alkoxy polyethylene oxide group based on the total amount of isocyanate compounds in the isocyanate composition obtained by dissociating the blocking agent from the blocked polyisocyanate in the blocked polyisocyanate composition.
The "Active NCO content rate" in Tables 1 and 2 is the content rate of active isocyanate groups in the blocked polyisocyanate composition, and was determined by adding an excess of a secondary amine relative to the isocyanate groups to the blocked polyisocyanate composition, heating at a temperature equal to or higher than the dissociation temperature of the oxime-based blocking agent (for example, 160°C) for a time sufficient for the blocking agent to dissociate (for example, 1 hour) to react the free isocyanate groups with the secondary amine, and then back-titrating the unreacted secondary amine with hydrochloric acid.
The "Catalyst amount" in Tables 1 and 2 is the amount of the deblocking catalyst contained in the composition (unit: parts by mass) when the amount of the blocked polyisocyanate contained in the composition is taken as 100 parts by mass.

[Evaluation]

(Preparation of Aqueous Coating Composition)

Using the blocked polyisocyanate compositions of Examples 1-9 and Comparative Examples 1-9, respectively, the aqueous coating compositions of Examples 1-9 and Comparative Examples 1-9 were prepared. Specifically, an aqueous coating composition was prepared by mixing BURNOCK WE-301 (manufactured by DIC Corporation, acrylic emulsion, solid content concentration 45% by mass, hydroxyl value 36 mgKOH/g, number-average molecular weight: 30,000, trade name), which is a main agent, a blocked polyisocyanate composition, which is a curing agent, and water, and stirring at high speed for 2 minutes at 2000 rpm using a homomixer. The usage amounts (unit: g) of the main agent (BURNOCK WE-301), the curing agent (blocked polyisocyanate composition), and water used were as shown in Tables 3 to 4. Note that the blended amount of the main agent shown in the tables is the total mass including the solvent.

(Evaluation of Low-temperature Curability)

[Measurement of Gel Fraction]

The aqueous coating composition prepared above was applied to release paper to a thickness of 200 μm before drying. The obtained coating film was left to stand at room temperature for 60 minutes, and then baked by heating in a constant temperature oven at 100°C for 20 minutes. The baked coating film (cured coating film) was immersed in methyl ethyl ketone for 24 hours at room temperature, and the gel fraction was determined. The gel fraction was calculated from the following formula. The results are shown in Tables 3 to 4.

Gel fraction (unit: % by mass) = Mass of coating film after immersion (mass of undissolved part)/Mass of coating film before immersion × 100

[Measurement of Martens Hardness]

The aqueous coating composition prepared above was applied to a colored steel sheet (white) to a thickness of 100 μm (wet) before drying. The obtained coating film was left to stand at room temperature for 60 minutes, and then baked by heating in a constant temperature oven at 100°C for 20 minutes. The indentation hardness of the baked coating film (cured coating film) was measured according to ISO 14577 under the following conditions. The results are shown in Tables 3 to 4.

[Conditions]

Test apparatus: FISCHERSCOPE HM2000 (manufactured by Fischer Instruments K.K.)
Indenter: Vickers diamond
Test load: 5 mN
Test temperature: 25°C

When the gel fraction measured above was 70% by mass or more and the Martens hardness was 60 $N/mm^2$ or

more, it was evaluated as having excellent low-temperature curability.

(Evaluation of Storage Stability)

The aqueous coating composition was left to stand at 25°C for 6 hours, and the dispersion state before and after standing was visually observed to evaluate storage stability. When the composition was liquid and no precipitation occurred after being left to stand, it was evaluated as having sufficient storage stability (A), and when it solidified or precipitation occurred after being left to stand, it was evaluated as having poor storage stability (B). In addition, if solidification or precipitation occurred in the state before being left to stand (initial state), it was also evaluated as having poor storage stability. The evaluation results are shown in Tables 3-4.

[Table 3]

| | | Example 1 | Example 2 | Example 3 | Example 4 | Example 5 | Example 6 | Example 7 | Example 8 | Example 9 |
|---|---|---|---|---|---|---|---|---|---|---|
| Main agent (WE-301) | | 100 | 100 | 100 | 100 | 100 | 100 | 100 | 100 | 100 |
| Curing agent | Type | BI-1 | BI-2 | BI-3 | BI-4 | BI-5 | BI-6 | BI-7 | BI-8 | BI-9 |
| | Blended amount [g] | 53 | 48 | 52 | 51 | 52 | 50 | 51 | 49 | 61 |
| | Average number of EO units | 15 | 22 | 22 | 45 | 15 | 15 | 15 | 22 | 15 |
| | Introduction rate of hydrophilic group [% by mass] | 20 | 10 | 20 | 10 | 20 | 20 | 20 | 10 | 30 |
| | Deblocking catalyst | TMOA-MC | TMOA-MC | TMOA-MC | TMOA-MC | TMOA-MC | TMA-Ac | HDTMA-H | DABCO TMR | TMOA-MC |
| | Amount of catalyst [parts by mass] | 15 | 15 | 15 | 15 | 15 | 8 | 10 | 20 | 15 |
| Water | | 39 | 36 | 39 | 38 | 38 | 37 | 38 | 37 | 43 |
| Gel fraction [% by mass] | | 90 | 90 | 90 | 90 | 90 | 80 | 70 | 70 | 90 |
| Martens hardness [N/mm$^2$] | | 80 | 70 | 70 | 70 | 80 | 70 | 60 | 60 | 60 |
| Storage stability | | A | A | A | A | A | A | A | A | B |

[Table 4]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Main agent (WE-301) | | 100 | 100 | 100 | 100 | 100 | 100 | 100 | 100 | 100 |
| Curing agent | Type | BI-10 | BI-11 | BI-12 | BI-13 | BI-14 | BI-15 | BI-16 | BI-17 | BI-18 |
| | Blended amount [g] | 46 | 64 | 52 | 54 | 49 | 50 | 52 | 44 | 45 |
| | Average number of EO units | 15 | 15 | 12 | 12 | 90 | 22 | 22 | 0 | 0 |
| | Introduction rate of hydrophilic group [% by mass] | 20 | 20 | 20 | 20 | 20 | 20 | 20 | 5 | 5 |
| | Deblocking catalyst | - | DOTDL | TMOA-MC | TMOA-MC | TMOA-MC | TMOA-MC | TMOA-MC | TMOA-MC | TMOA-MC |
| | Amount of catalyst [parts by mass] | 0 | 40 | 10 | 15 | 15 | 5 | 10 | 5 | 10 |
| Water | | 36 | 44 | 38 | 40 | 37 | 37 | 39 | 34 | 35 |
| Gel fraction [% by mass] | | 0 | 0 | 50 | 0 | 90 | 60 | 0 | 20 | 0 |
| Martens hardness [N/mm$^2$] | | 0 | 0 | 10 | 0 | 50 | 10 | 0 | 0 | 0 |
| Storage stability | | A | B | A | B | B | A | B | A | B |

## Claims

1. A blocked polyisocyanate composition, comprising: a blocked polyisocyanate; and a deblocking catalyst,

   wherein the blocked polyisocyanate has an alkoxy polyethylene oxide group comprising an average of 14 to 50 ethylene oxide units, and
   the deblocking catalyst comprises a quaternary ammonium salt.

2. The blocked polyisocyanate composition according to Claim 1, wherein a number of the ethylene oxide units comprised in the alkoxy polyethylene oxide group is an average of 15 to 25.

3. The blocked polyisocyanate composition according to Claim 1, wherein a content of the alkoxy polyethylene oxide group is 5 to 30% by mass, based on a total amount of isocyanate compounds in an isocyanate composition obtained by dissociating a blocking agent from the blocked polyisocyanate.

4. The blocked polyisocyanate composition according to Claim 1, wherein a content of the alkoxy polyethylene oxide group is 5 to 25% by mass, based on a total amount of isocyanate compounds in an isocyanate composition obtained by dissociating a blocking agent from the blocked polyisocyanate.

5. The blocked polyisocyanate composition according to Claim 1, wherein the blocked polyisocyanate comprises a structure derived from an aliphatic polyisocyanate having 4 to 6 carbon atoms or a derivative thereof.

6. The blocked polyisocyanate composition according to Claim 1, wherein the quaternary ammonium salt comprises a cationic group represented by the following formula (1).

   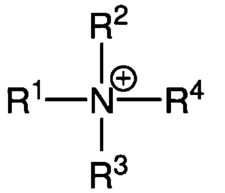 (1)

   [In formula (1), $R^1$ represents an alkyl group having 1 to 16 carbon atoms which may have a hydroxy group, an amino group, or an alkoxy group as a substituent, and $R^2$ to $R^4$ each independently represent an alkyl group having 1 to 8 carbon atoms.]

7. The blocked polyisocyanate composition according to Claim 1, wherein the blocked polyisocyanate has an isocyanate group blocked with an oxime-based blocking agent.

8. A curing agent for aqueous coating material, comprising the blocked polyisocyanate composition according to any one of Claims 1 to 7.

9. An aqueous coating composition, comprising: a compound having two or more isocyanate-reactive groups; a blocked polyisocyanate; a deblocking catalyst; and water,

   wherein the blocked polyisocyanate has an alkoxy polyethylene oxide group comprising an average of 14 to 50 ethylene oxide units, and
   the deblocking catalyst comprises a quaternary ammonium salt.

10. A coating film formed from the aqueous coating composition according to Claim 9.

## INTERNATIONAL SEARCH REPORT

International application No.
**PCT/JP2024/002924**

### A. CLASSIFICATION OF SUBJECT MATTER

***C08G 18/80***(2006.01)i; ***C08G 18/00***(2006.01)i; ***C08G 18/18***(2006.01)i; ***C08G 18/28***(2006.01)i; ***C09D 5/00***(2006.01)i; ***C09D 7/63***(2018.01)i; ***C09D 175/08***(2006.01)i
FI: C08G18/80; C08G18/18; C08G18/28 015; C08G18/00 C; C09D175/08; C09D7/63; C09D5/00 Z

According to International Patent Classification (IPC) or to both national classification and IPC

### B. FIELDS SEARCHED

Minimum documentation searched (classification system followed by classification symbols)

C08G18/80; C08G18/00; C08G18/18; C08G18/28; C09D5/00; C09D7/63; C09D175/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/020534 A1 (ASAHI KASEI KABUSHIKI KAISHA) 04 February 2021 (2021-02-04) paragraphs [0129], [0229], [0271], table 18, example 42, paragraph [0279], table 21, example 55 | 1-6, 8-10 |
| A | | 7 |
| A | JP 2021-101007 A (ASAHI KASEI KABUSHIKI KAISHA) 08 July 2021 (2021-07-08) | 1-10 |
| A | JP 2013-91767 A (TOSOH CORP.) 16 May 2013 (2013-05-16) | 1-10 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/002924**

| Patent document cited in search report | Publication date (day/month/year) | Patent family member(s) | Publication date (day/month/year) |
|---|---|---|---|
| WO 2021/020534 A1 | 04 February 2021 | EP 4008757 A1<br>paragraphs [0220], [0357], [0395], table 18, example 42, paragraph [0401], table 21, example 55<br>CN 113939552 A | |
| JP 2021-101007 A | 08 July 2021 | EP 3783041 A1<br>EP 3995521 A1<br>CN 112300365 A<br>CN 115246921 A | |
| JP 2013-91767 A | 16 May 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06192364 A
- JP H08170048 A
- JP 5073978 B
- JP 508 A